Europäisches Patentamt

European Patent Office

Office européen des brevets

(11) Veröffentlichungsnummer: **0 356 779**
**A1**

## (12) EUROPÄISCHE PATENTANMELDUNG

(21) Anmeldenummer: 89114791.0

(22) Anmeldetag: 10.08.89

(51) Int. Cl.⁵: **B65D 81/22 , A47J 47/10**

(30) Priorität: 02.09.88 DE 8811116 U

(43) Veröffentlichungstag der Anmeldung:
07.03.90 Patentblatt 90/10

(84) Benannte Vertragsstaaten:
**AT BE CH DE FR IT LI LU NL SE**

(71) Anmelder: **Melitta-Werke Bentz & Sohn**
**Ringstrasse 99**
**D-4950 Minden 1(DE)**

(72) Erfinder: **Creyaufmüller, Peter**
**Bliefterningweg 6a**
**D-4950 Minden(DE)**

(74) Vertreter: **Stracke, Alexander, Dipl.-Ing. et al**
**Jöllenbecker Strasse 164**
**D-4800 Bielefeld 1(DE)**

(54) Vorratsbehälter für Backwaren, Obst, Gemüse, Kartoffeln od. dgl.

(57) Ein Vorratsbehälter (10) für Backwaren, Obst, Gemüse, Kartoffeln od.dgl. soll so gestaltet werden, daß die beispielsweise genannten Lebensmittel in etwa solange frischgehalten werden können, wie dieses bislang nur durch Frischhaltekühlschränke mit integrierter Luftbefeuchtung möglich ist.

Dies wird bei einem Vorratsbehälter (10), der aus einer Dose (11) sowie einem luftdicht schließenden Deckel (12) besteht, dadurch erreicht, daß innerhalb der Dose (11) ein Wasservorratsbehälter (13) angeformt oder angeordnet ist. Beispielsweise kann ein Wasservorratsbehälter (13) im Bereich einer Seitenwand der Dose (11) angeformt und durch einen Trennsteg (11) vom nutzbaren Füllraum (14) der Dose (11) im übrigen getrennt sein.

Durch die Verdunstung des Wassers ergibt sich im Inneren des Behälters eine Erhöhung der Luftfeuchtigkeit, wodurch Lagergut über einen längeren Zeitraum frischgehalten werden kann als mit herkömmlichen Vorratsbehältern.

Fig. 2

## Vorratsbehälter für Backwaren, Obst, Gemüse, Kartoffeln od. dgl.

Die vorliegende Erfindung betrifft einen Vorratsbehälter für Backwaren, Obst, Gemüse, Kartoffeln od.dgl.,bestehend aus einer Dose sowie einem luftdicht schließenden Deckel.

Vorratsbehälter der gattungsgemäßen Art sind in vielerlei Ausführungsformen bekannt. Derartige Vorratsbehälter ermöglichen es, Backwaren, Obst, Gemüse, Kartoffeln od. dgl. relativ lange frisch zu halten.

Es ist darüber hinaus bekannt, daß Backwaren, Obst, Gemüse, Kartoffeln od. dgl. in Frischhaltekühlschränken mit integrierter Luftbefeuchtung noch länger gelagert werden kann als in den vorbekannten Vorratsbehältern.

Ziel der vorliegenden Erfindung ist es, einen Vorratsbehälter der gattungsgemäßen Art zu schaffen, der in der Lage ist, Backwaren, Obst, Gemüse, Kartoffeln od.dgl. in etwa so lange frisch halten zu können, wie dieses bislang nur durch Frischhaltekühlschränke mit integrierter Luftbefeuchtung möglich ist.

Diese Aufgabe wird erfindungsgemäß dadurch gelöst, daß innerhalb der Dose ein Wasservorratsbehälter angeformt oder eingesetzt ist.

Der Wasservorratsbehälter wird vor dem Einlagern von Backwaren, Obst, Gemüse, Kartoffeln od. dgl. mit einer vorbestimmten Wassermenge gefüllt, anschließend wird die Dose gefüllt und durch den Deckel luftdicht verschlossen. Im Inneren des Vorratsbehälters steigt durch die Verdunstung des Wassers nun die Luftfeuchtigkeit erheblich an und hierdurch wird sichergestellt, daß das Lagergut über einen erheblich längeren Zeitraum frisch gehalten wird als dies mit herkömmlichen Vorratsbehältern der Fall ist.

Besonders hervorzuheben ist, daß ein erfindungsgemäßer Vorratsbehälter eine lange Frischhaltung des Lagergutes auch bei normalen Raumtemperaturen ermöglicht. Ebenso konnte festgestellt werden, daß die relative Luftfeuchtigkeit in einem erfindungsgemäßen Vorratsbehälter bei ca. 95 % liegt und daß eine derart hohe Luftfeuchtigkeit es ermöglicht, viele Obst und Gemüsesorten zwei bis drei mal so lange lagern zu können, als mit herkömmlichen Vorratsbehältern.

Weitere Merkmale der Erfindung sind Gegenstand von Unteransprüchen.

In der beigefügten Zeichnung sind Ausführungsbeispiele der Erfindung dargestellt, die im folgenden näher beschrieben werden.

Es zeigen:

Fig. 1 einen erfindungsgemäßen Vorratsbehälter im Halbschnitt,

Fig. 2 ein weiteres Ausführungsbeispiel eines Vorratsbehälters, ebenfalls in einem Halbschnitt dargestellt.

Fig. 3 einen Halbschnitt eines Vorratsbehälters nach einem weiteren Ausführungsbeispiel der Erfindung

Fig. 4 einen Vorratsbehälter nach einem weiteren Ausführungsbeispiel der Erfindung im Halbschnitt

Fig. 5-7 Teilansichten einer Belüftungsvorrichtung eines Vorratsbehälters in Richtung des Pfeiles V in Fig. 3, gezeigt in verschiedenen Funktionsstellungen dieser Belüftungsvorrichtung.

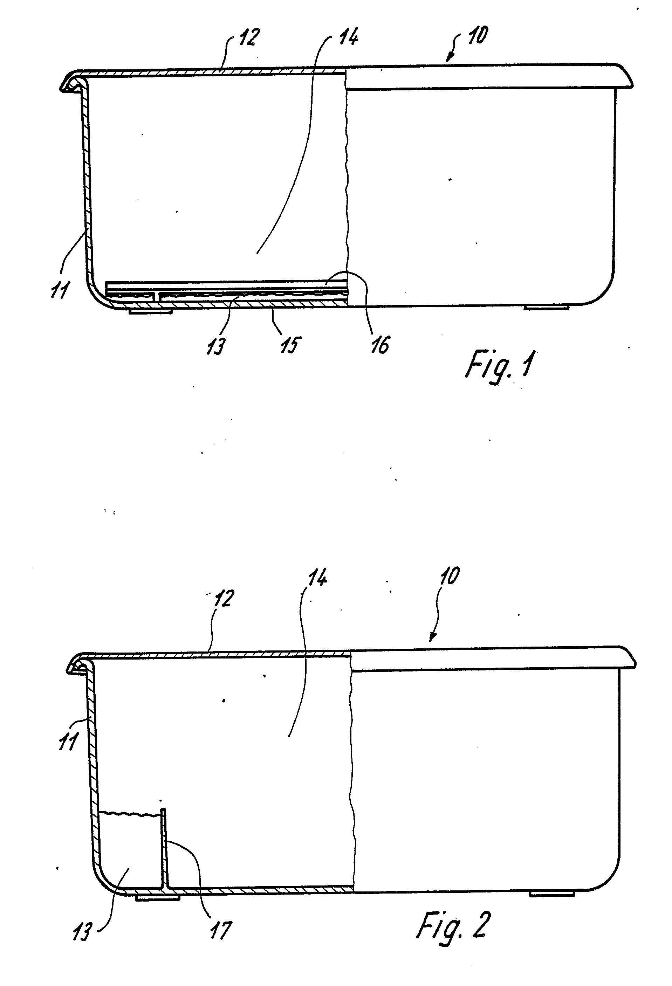

Der in Figur 1 dargestellte, insgesamt mit dem Bezugszeichen 10 versehene Vorratsbehälter besteht aus einer Dose 11 sowie einem die Dose 11 luftdicht verschließenden Deckel 12.

Im Bodenbereich der Dose 11 ist ein Wasservorratsbehälter 13 angeformt, der gegenüber dem nutzbaren Füllraum 14 der Dose 11 derartig getrennt ist, daß zwar im Wssservorratsbehälter 13 befindliches Wasser verdunsten und den Innenraum des Vorratsbehälters 10 befeuchten kann, daß aber Füllgut nicht direkt mit dem Wasser in Berührung kommt.

Beim Ausführungsbeispiel gemäß Figur 1 ist dies dadurch erreicht, daß im Bodenbereich gegenüber dem Boden 15 selbst abständig liegende Rippen 16 angeformt sind.

Vorzugsweise erstreckt sich der Wasservorratsbehälter 13 über die gesamte Bodenfläche der Dose 11. Hierdurch wird eine große Verdunstungsfläche erzielt.

Die Dose 11 und der Deckel 12 sind vorzugsweise aus Kunststoff hergestellt. Dabei ist es sinnvoll, zumindest die Dose 11 aus einem durchsichtigen Material herzustellen, da in diesem Falle der Wasserstand im Wasservorratsbehälter 13 visuell kontrolliert werden kann.

Auch der Vorratsbehälter 10 nach dem Ausführungsbeispiel gemäß Figur 2 besteht aus einer Dose 11 und einem luftdicht schließenden Deckel 12.

In Übereinstimmung mit der vorliegenden Erfindung ist auch hier im inneren der Dose 11 ein Wasservorratsbehälter 13 angeformt. Wie Figur 2 deutlich macht, ist der Wasservorratsbehälter 13 im Bereich einer Seitenwand der Dose 11 angeformt und durch einen Trennsteg 17 vom nutzbaren Füllraum 14 der Dose 11 getrennt. In Erweiterung des Ausführungsbeispieles gemäß Figur 2 kann der im Seitenwandbereich liegende Wasservorratsbehälter natürlich auch über mehrere Seitenwände der Dose verlaufen.

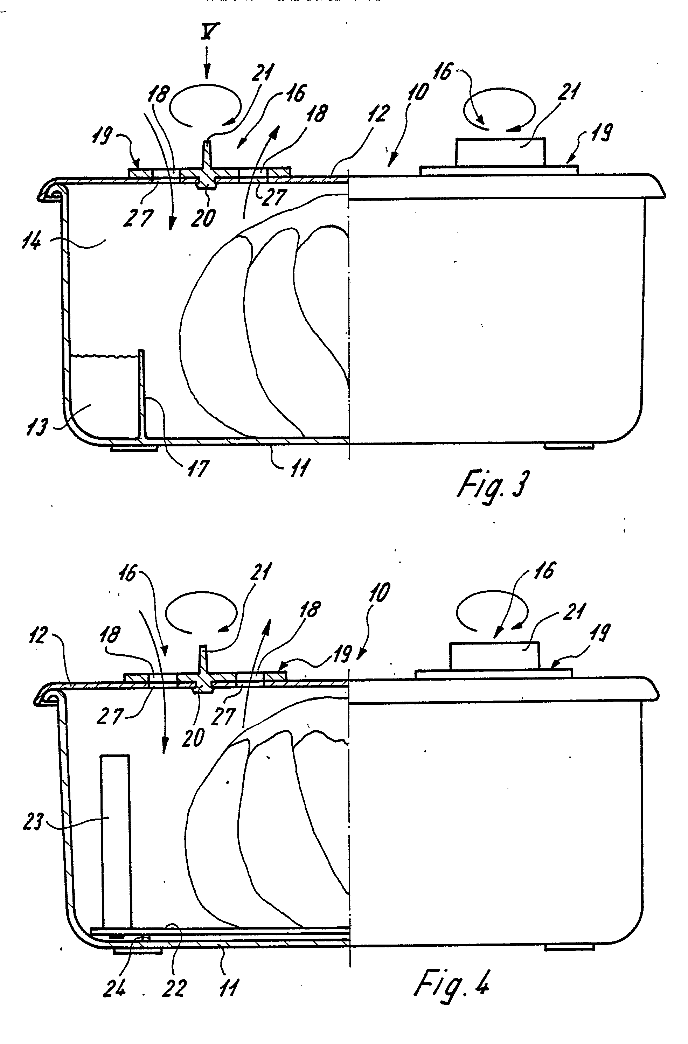

Der in Fig. 3 dargestellte Vorratsbehälter weist, wie der Vorratsbehälter 10 gemäß Fig. 2, einen Wasservorratsbehälter 13 auf, der im Bereich einer Seitenwand der Dose 11 angeformt und durch einen Trennsteg 17 vom nutzbaren Füllraum 14 der Dose 11 getrennt ist.

Darüber hinaus ist der Vorratsbehälter 10 nach Fig. 3 mit zwei Belüftungsvorrichtungen 16 ausgestattet. Diese Belüftungsvorrichtungen 16 bestehen im dargestellten Ausführungsbeispiel aus teilweisen Durchbrechungen 27 des Deckels 12 sowie aus einem teilweise ebenfalls wieder mit Durchbrechungen 18 versehenen Verschlußteil 19.

Die Verschlußteile 19 sind um eine Achse 10 drehbar am Deckel 12 festgelegt und beispielsweise mit einem Betätigungsknebel 21 versehen.

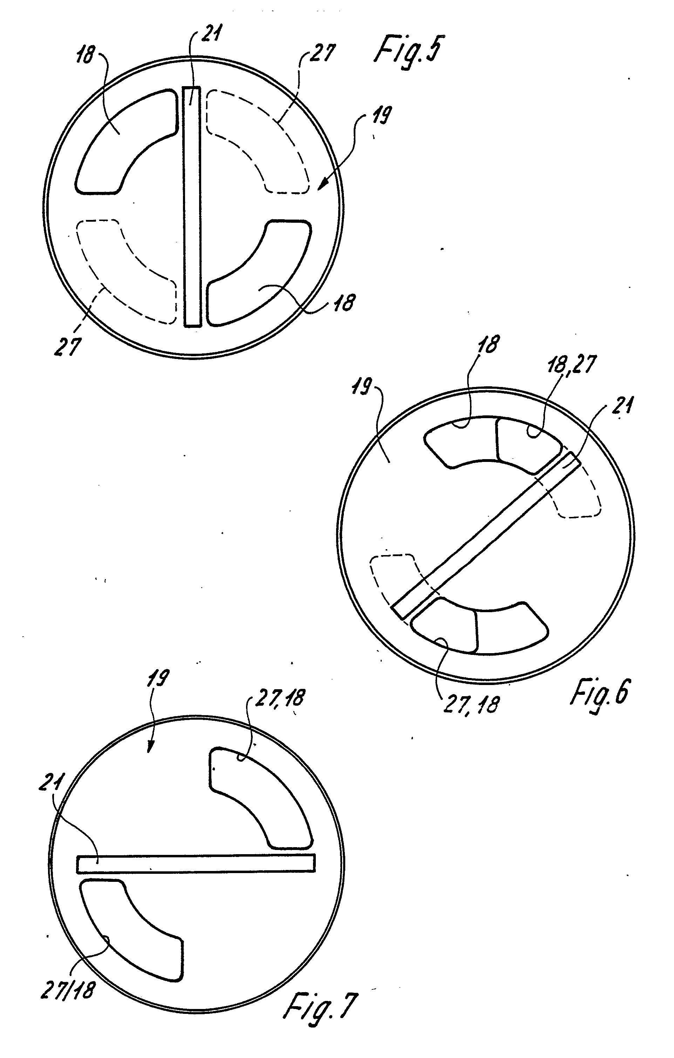

Wie insbesondere die Fig. 5-7 deutlich machen, sind die Durchbrechungen 18 des Verschlußteiles 19 ebenso wie die Durchbrechungen 27 des Deckels 12 als bogenförmige Langlöcher ausgebildet, die jeweils gegeneinander winkelversetzt angeordnet sind. Darüber hinaus sind die Durchbrechungen 27 und 18 formgleich ausgebildet und liegen auf gleichen Abständen zur Achse 20, um den das Verschlußteil 19 drehbar am Deckel 12 befestigt ist. Dies bedeutet, daß je nach Drehstellung des Verschlußteiles 19 die Durchbrechungen 27 und die Durchbrechungen 18 des Deckels 12 bzw. des Verschlußteiles 19 ganz oder teilweise deckungsgleich übereinanderliegen (s. Fig 7 und 6) oder gegeneinander vollkommen versetzt liegen, was in Fig. 5 gezeigt ist. Liegen die Durchbrechungen 27 und 18 gemäß fig. 5 vollkommen versetzt zueinander, ist der Deckel 12 praktisch vollständig geschlossen. Werden hingegen die Durchbrechungen 27 und 18 teilweise oder völlig deckungsgleich übereinander bewegt, so ergibt sich eine mehr oder minder große Öffnungsfläche im Deckelbereich, wodurch eine mehr oder minder starke Entlüftung oder Belüftung des Behälterinneren erreicht wird.

Diese Belüftungsmöglichkeit ist für verschiedenste Produkte im Hinblick auf eine Lagerzeitverlängerung äußerst wünschenswert.

Es sei ausdrücklich drauf hingewiesen, daß ein Vorratsbehälter 10 statt,wie dargestellt mit zwei Belüftungsvorrichtungen,auch nur mit einer Belüftungsvorrichtung ausgestattet sein kann oder, bei relativ großen Vorratsbehältern, auch noch weitere Belüftungsvorrichtungen vorgesehen werden können.

Ebenso ist es möglich, die geometrische Form der Belüftungsvorrichtung zu verändern, beispielsweise dahingehend, daß statt bogenförmiger Langlöcher andere Formen von Durchbrechungen verwendet werden, die mehr oder weniger zur Deckung gebracht werden können. Statt eines drehbaren Verschlußteiles 19 kann ebenso ein Schieber zum Einsatz gelangen, um eine Belüftung des Behälterinnenraumes zu ermöglichen.

Beim Ausführungsbeispiel der Erfindung nach Fig. 4, bei dem der Deckel 12 ebenfalls wieder mit Belüftungsvorrichtungen 16 versehen ist, ist gezeigt, daß im Bodenbereich des Behälters 11 ein Rost 22 angeordnet ist. Dieser Rost 22, der wahlweise fest mit dem Behälter 11 verbunden sein kann oder als Einsatzteil lose in den Behälter 11 eingesetzt sein kann, bildet die Auflageebene für das Lagergut. Unterhalb des Rostes 22 kann dann Wasser in den Behälter 11 eingefüllt werden. Eine Kontaktierung des Lagergutes mit dem im Bodenbereich befindlichen Wasser wird durch den Rost 22 verhindert. Ebenso ist es möglich, am Rost 22 eine oder mehrere Verdunsterkassetten 23 auswechselbar anzubringen. Damit wird das Einfüllen von Wasser in den Behälter 11 erübrigt, da die Verdunsterkassetten 23 entsprechend Feuchtigkeit abgeben können. Es können je nach Behältergröße auch mehrere Verdunsterkassetten 23 am Rost 22 festgelegt werden.

Hierdurch wird eine große Variabilität erreicht, da der Anwender je nach Lagergut beispielsweise selbst entscheiden kann, wie viele Verdunsterkassetten 23 er im speziellen Anwendungsfall einsetzen will.

Vorteilhaft ist es auch, den Rost 22 nicht nur als Ein satzteil in den Behälter 11 einzubringen, sondern auch den Bereich der Stützfüße 24 des Rostes 22 höhenverstellbar zu gestalten, da hierdurch der freie Abstand zwischen Behälterboden und Auflagefläche des Rostes 22 individuell reguliert werden kann.

Bei dem Ausführungsbeispiel der Erfindung gemäß Fig. 4 wird der Wasservorrat durch die Verdunsterkassetten 23 in den Vorratsbehälter 10 eingebracht, so daß in diesem Falle davon gesprochen werden kann, daß ein Wasservorratsbehälter, nämlich mindestens eine Verdunsterkassette 23, innerhalb der Dose 11 angebracht ist.

Die dargestellten Ausführungsbeispiele sollen lediglich andeuten, daß bezüglich der Gestaltung des Wasservorratsbehälters 13 vielfältige Möglichkeiten bestehen. Nur beispielshaft sei darauf verwiesen, daß ein Wasservorratsbehälter auch im oberen Randbereich der Dose 11 angeformt sein kann.

**Ansprüche**

1. Vorratsbehälter für Backwaren, Obst, Gemüse, Kartoffeln od. dgl. bestehend aus einer Dose sowie einem luftdicht schließenden Deckel, **dadurch gekennzeichnet,** daß innerhalb der Dose (11) ein Wasservorratsbehälter (13) angeformt oder eingesetzt ist.

2. Vorratsbehälter nach Anspruch 1, dadurch gekennzeichnet, daß der Wasservorratsbehälter (13) im Bodenbereich der Dose (11) angeordnet ist.

3. Vorratsbehälter nach Anspruch 1 oder 2, dadurch gekennzeichnet,daß der Wasservorratsbehälter (13) sich über die gesamte Bodenfläche der Dose (11) erstreckt.

4. Vorratsbehälter nach Anspruch 1, dadurch gekennzeichnet, daß der Wasservorratsbehälter (13) im Bereich einer oder mehrerer Seitenwände der Dose (11) angeordnet ist.

5. Vorratsbehälter nach einem oder mehreren der vorhergehenden Ansprüche, dadurch gekennzeichnet, daß die Dose (11) nebst Wasservorratsbehälter (13) aus einem durchsichtigen Material hergestellt ist.

6. Vorratsbehälter nach Anspruch 5, dadurch gekennzeichnet, daß die Dose (11) nebst Wasservorratsbehälter (13) einstückig aus Kunststoff gefertigt ist.

7. Vorratsbehälter nach einem oder mehreren der Ansprüche 1 bis 3, dadurch gekennzeichnet,daß der Wasservorratsbehälter (13) durch abständig zum Boden (15) der Dose (11) verlaufende Rippen (16) begrenzt ist.

8. Vorratsbehälter nach Anspruch 4, dadurch gekennzeichnet, daß der Wasservorratsbehälter (13) durch eine oder mehrere Seitenwände einerseits und durch einen oder mehrere Trennstege (17) andererseits begrenzt ist.

9. Vorratsbehälter nach einem oder mehreren der Ansprüche 1 bis 8, dadurch gekennzeichnet, daß vorzugsweise im Bereich des Deckels (12) mindestens eine Belüftungsvorrichtung (16) vorgesehen ist.

10. Vorratsbehälter nach Anspruch 9, dadurch gekennzeichnet, daß die Belüftungsvorrichtung (16) aus einer oder mehreren, im Bereich des Deckels (12) vorgesehenen Durchbrechungen (27) sowie einem Verschlußteil (19) besteht, welches ebenfalls mit einer oder mehreren Durchbrechungen (18) versehen ist, wobei die Durchbrechungen (27) des Deckels (12) und die Durchbrechungen (18) des Verschlußteiles (19) wahlweise ganz oder teilweise miteinander in Deckung gebracht werden oder vollkommen gegeneinander verschoben werden können.

11. Vorratsbehälter nach Anspruch 10, dadurch gekennzeichnet, daß das Verschlußteil (19) in Form eines Drehschiebers ausgebildet und um eine Achse (20) drehbar am Deckel (12) festgelegt ist.

12. Vorratsbehälter nach Anspruch 10 oder 11, dadurch gekennzeichnet, daß das Verschlußteil (19) mit einem Betätigungsorgan, vorzugsweise in Form eines Betätigungsknebels (21), ausgestattet ist.

13. Vorratsbehälter nach einem oder mehreren der Ansprüche 1 bis 12, dadurch gekennzeichnet, daß oberhalb des Bodens des Behälters (11) ein Rost (22) zur Auflage des Lagergutes angeordnet ist.

14. Vorratsbehälter nach Anspruch 13, dadurch gekennzeichnet, daß der Rost (22) mit dem Behälter (11) im übrigen fest verbunden ist.

15. Vorratsbehälter nach Anspruch 13, dadurch gekennzeichnet, daß der Rost (22) als Einsatzteil lose in den Behälter (11) eingelegt ist.

16. Vorratsbehälter nach Anspruch 15, dadurch gekennzeichnet, daß der Rost (22) über Stützfüße (24) am Boden des Behälters (11) abgestützt ist.

17. Vorratsbehälter nach Anspruch 16, dadurch gekennzeichnet, daß die Stützfüße (24) des Rostes (22) höhenverstellbar sind.

18. Vorratsbehälter nach einem oder mehreren der Ansprüche 13 bis 17, dadurch gekennzeichnet, daß am Rost (22) eine oder mehrere Verdunsterkassetten (23) auswechselbar festlegbar sind.

*Fig. 1*

*Fig. 2*

Melitta

Fig. 3

Fig. 4

Melitta

**Fig.5**

**Fig.6**

**Fig.7**

Melitta

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | CH-A-408 976 (NEUENSCHWANDER)<br><br>* Insgesamt *<br><br>----- | 1-8 | B 65 D 81/22<br>A 47 J 47/10 |

**RECHERCHIERTE SACHGEBIETE (Int. Cl.4)**

B 65 D
A 47 J

### MANGELNDE EINHEITLICHKEIT DER ERFINDUNG

Nach Auffassung der Recherchenabteilung entspricht die vorliegende europäische Patentanmeldung nicht den Anforderungen an die Eintheitlichkeit der Erfindung; sie enthält mehrere Erfindungen oder Gruppen von Erfindungen, nämlich:

1. Ansprüche 1-8: Dose mit Wasservorratsbehälter

2. Ansprüche 9-12: Dose mit Belüftungsvorrichtung

3. Ansprüche 13-18: Dose mit einem Rost zur Auflage des Lagergutes

Der vorliegende europäische Teilrecherchenbericht wurde für die Teile der Anmeldung erstellt, die sich auf die zuerst in den Patentansprüchen erwähnte Erfindung beziehen.

| Recherchenort | Abschlußdatum der Recherche | Prüfer |
|---|---|---|
| Den Haag | 10-11-1989 | BESSY |